# EUROPÄISCHE PATENTANMELDUNG

(11) **EP 0 716 497 A1**
(43) Veröffentlichungstag der Anmeldung: **12.06.1996**
(21) Anmeldenummer: 94119193.4
(22) Anmeldetag: 06.12.1994
(51) Int. Cl.: H02K 21/00

(54) **Permanentfeldmotor**

(71) Anmelder: Bretthauer, Franz, D-40670 Meerbusch-Osterath (DE)
(72) Erfinder: Bretthauer, Franz, D-40670 Meerbusch-Osterath (DE)
(74) Vertreter: COHAUSZ HASE DAWIDOWICZ & PARTNER

(57) **Zusammenfassung**

Die technische Erfindung betrifft eine dynamoelektrische Maschine, deren Ständerpole (3), und deren Läuferpole (4) von Permanentmagneten magnetisiert werden. Die Ständerpole (3) sind von einer Erregerwickung (5) umgeben, die, an eine gleichgerichtete Spannungsquelle (16) angeschlossen, ein Magnetfeld induzieren, das dem permanenten Magnetfeld entgegengesetzt ist.

## Beschreibung

Es sind verschiedene Ausführungen dynamoelektrischer Maschinen bekannt, deren Erregersystem Permanentmagnete aufweist.

Zum Einen gibt es permanenterregte Gleichstrommaschinen, bei denen das magnetische Feld im Ständer von Permanentmagneten erzeugt wird. Diese Motoren sind für ihre gleichmäßigen Laufeigenschaften bekannt. Zum Anderen gibt es permanenterregte Synchronmaschinen, deren Läufer mit Permanentmagneten ausgestattet sind. Wie die genannten Gleichstrommaschinen haben auch die Synchronmaschinen besonders gleichmäßige Laufeigenschaften.

Alle permanenterregten dynamoelektrischen Maschinen haben aufgrund der geringeren Anzahl von Wicklungen kleinere Abmessungen als konventionelle Motoren bzw. Generatoren und zeichnen sich wegen der fehlenden Schlupf- und Erregerverluste durch einen höheren Wirkungsgrad aus.

Die Aufgabe der Erfindung besteht darin, eine permanenterregte dynamoelektrische Maschine zu bauen, die einen höheren Wirkungsgrad als bekannte Motoren und Generatoren hat.

Diese Aufgabe wird erfindungsgemäß durch eine dynamoelektrische Maschine gelöst, die mindestens einen Ständer hat, der eine Anzahl von n Ständerpolen mit ferromagnetischen mit Erregerwicklungen umgebenen Kernen aufweist, und die mindestens einen Läufer hat, der eine Anzahl von k permanentmagnetischen Läuferpolen aufweist.

Die Kerne der Ständerpole sind permanent magnetisiert und an die Erregerwicklungen ist zeitweilig eine gleichgerichtete Spannung anlegbar, die in den Ständerpolen eine Magnetisierung induziert, die der permanenten Magnetisierung entgegengerichtet ist.

Vorteile der dynamoelektrischen Maschine nach dem Hauptanspruch sind im Gegensatz zu bekannten Gleichstrommaschinen die kompaktere Bauweise und vorallem der erhöhte Wirkungsgrad.

Die dynamoelektrische Maschine zeichnet sich aufgrund der erfindungsgemäßen kontaktlosen elektronischen Steuerung durch hohe Drehzahlen von mehr als 50000 U/min und durch eine verlängerte Lebensdauer aus.

Die Bevorzugte Ausführungsbeispiele der dynamoelektrischen Maschine tragen die Merkmale der Unteransprüche.

Es zeigen:

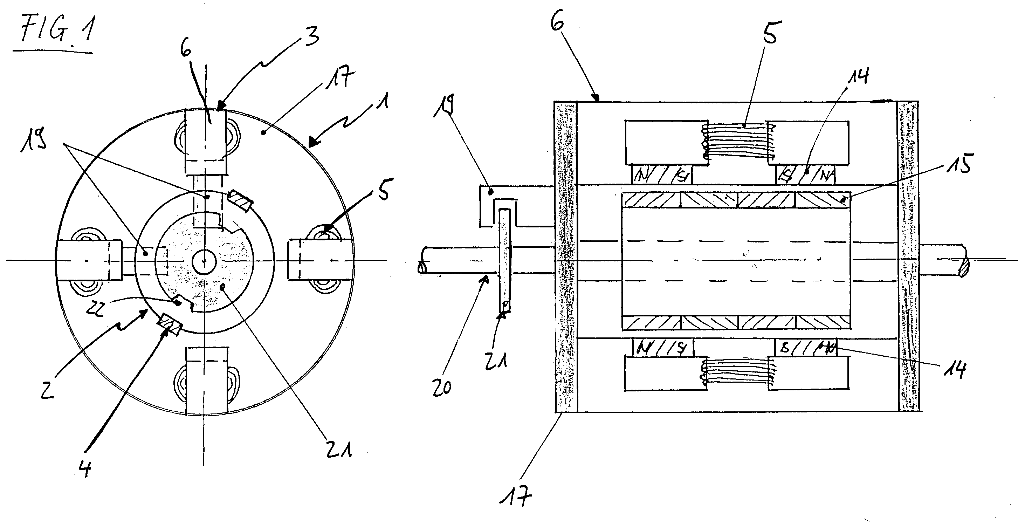

- **Fig.1:**: Der schematische Gesamtaufbau.

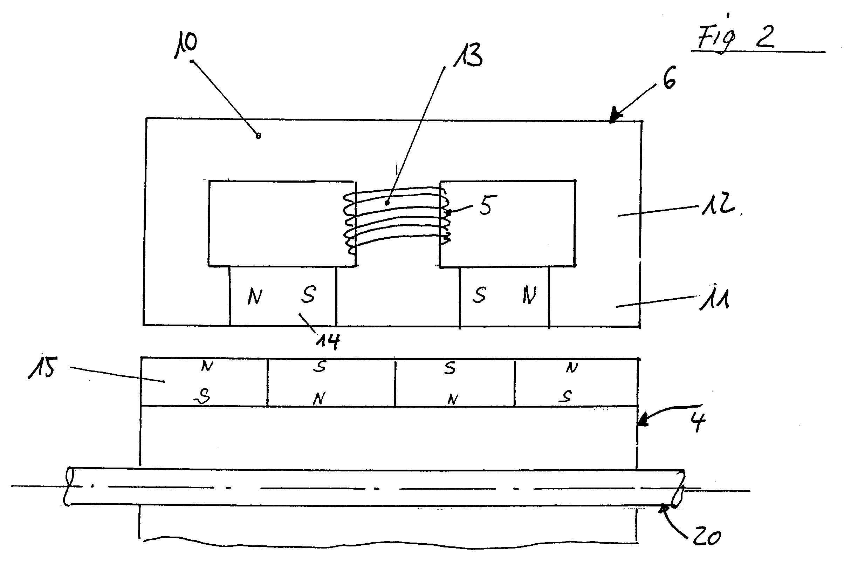

- **Fig.2:**: Die Anordnung der Permanentmagneten in den Ständer- und Läuferpolen.

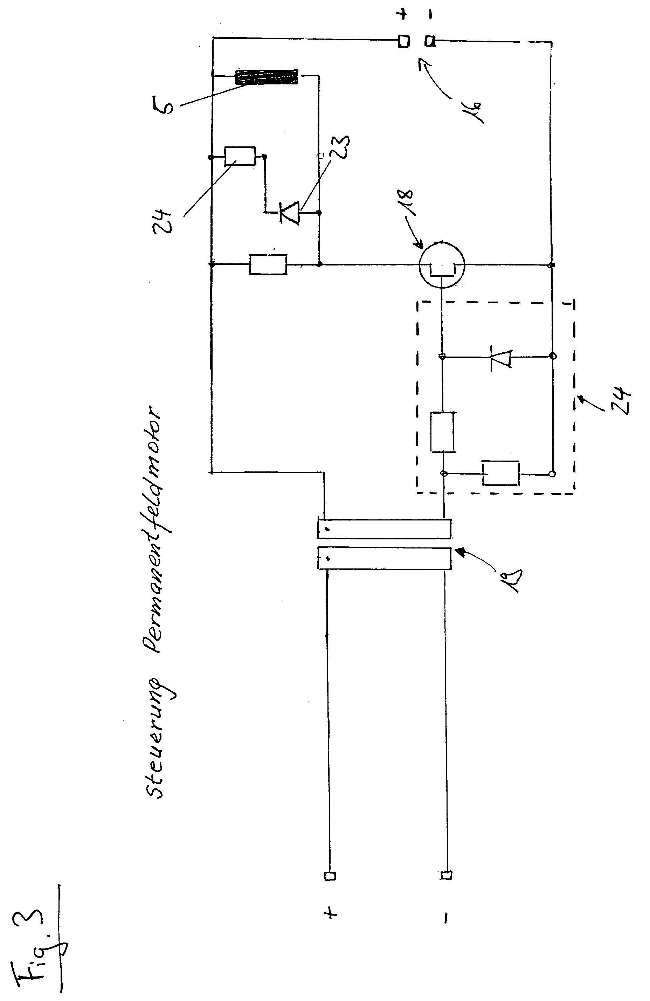

- **Fig.3:**: Die elektrische Schaltung der dynamoelektrischen Maschine.

Die dynamoelektrische Maschine und besondere Ausführungsbeispiele sind in den Abbildungen dargestellt und werden im folgenden näher beschrieben.

Die dynamoelektrische Maschine hat mindestens einen Ständer (1) mit einer Anzahl von n Ständerpolen (3) (im Beispiel ist n = 4) und mindestens einen Läufer (2) mit k permanentmagnetischen Läuferpolen (4) (im Beispiel ist k = 2). Die Ständerpole (3) haben Kerne (6) aus ferromagnetischem Material, insbesondere Eisen, die von Erregerspulen (5) umgeben sind.

Die Ständepole (3) weisen wie die Läuferpole (4) eine permanente Magnetisierung auf. Die Erregerspulen (5) sind zeitweilig mit einer Spannungsquelle verbindbar, die eine gleichgerichtete Versorgungsspannung (16) liefert. Die Versorgungsspannung (16) ist derart gepolt, daß das von ihr in den Ständerpolen (3) induzierte Magnetfeld dem permanenten Magnetfeld der Ständerpole entgegengerichtet ist.

In einer bevorzugten Ausführung der dynamoelektrischen Maschine wird das permanente Magnetfeld der Ständerpole (3), sowie das permanente Magnetfeld der Läuferpole (4) von Permanentmagneten induziert, die sich in den Kernen der Pole befinden.

Die Kerne (6) der Ständerpole (3) sind in einer bevorzugten Form als Mantelkerne ausgebildet, die ein Unterjoch (11), ein Oberjoch (10), zwei Seitenstege (12) und einen Mittelsteg (13) aufweisen. Die Erregerwicklungen (5) umgeben jeweils den Mittelsteg (13). Die Permanentmagneten (14) sind im Unterjoch (11) eingebracht und gleichpolig beidseitig des Mittelsteges (13) angeordnet.

Um den Verlust der Magnetisierung durch austretende Feldlinien gering zu halten, sind die Mantelkerne auf einer Halterung (17) befestigt, die aus Material geringer magnetischer Suszeptibilität gefertigt ist.

Bei einer bevorzugten Ausführung der dynamoelektrischen Maschine ist die Zahl n der Ständerpole (3) gößer, insbesondere um ein Vielfaches größer, als die Zahl k der Läuferpole (4).

Die Permanentmagneten (15) in den Läuferpolen (4) sind gleichpolig zu den Permanentmagneten (14) der Ständerpole (3) angeordnet. In einer bevorzugten Ausführungsform der dynamoelektrischen Maschine stehen die Polachsen der Permanentmagneten (15) nahezu senkrecht zu den Achsen der Permanentmagneten (14) in den Ständerpolen (3).

Um die Versorgungsspannung (16) mit den Erregerwicklungen (5) zu verbinden, sind die Erregerwicklungen (5) über Schalter mit der Versorgungsspannung (16) verbunden.

Mittels einer Steuerscheibe (21), die auf der Welle (20) der dynamoelektrischen Maschine justierbar angebracht ist, werden die Schalter zyklisch betätigt.

Wird ein Schalter geschlossen, so induziert der Strom der Versorgungsspannung (16) ein Magnetfeld, das so stark ist, daß es das permanente Magnetfeld innerhalb des Kernes (6) kompensiert. Der so geschaltete Ständerpol (3) stößt in diesem Zustand einen Läuferpol (4) ab. Wird der Schalter wieder geöffnet, klingt der Strom mit dem Zusammenbrechen des induzierten Magnetfeldes ab. Nach dem Zusammenbruch kehrt sich die Richtung des Stromes um, da das Feld der Permanentmagneten (14) eine Spannung entgegengesetzten Vorzeichens in der Spule (5) induziert.

Um die Reibungsverluste an den Schaltern möglichst gering zu halten, sind Schalter als Transistoren (18), insbesondere Feldeffektleistungstransistoren, ausgeführt, deren Basis mit einer Lichtschranke (19), insbesondere einer Gabellichtschranke, verbunden ist. Im Schaltkreis ist eine Transistorschutzschaltung (24) vorgesehen.

Die Lichtschranken (19) schalten, wenn die an der Steuerscheibe (21) vorgesehenen Aussparungen (22) den Lichtstrahl freigeben. Die Aussparungen (22) sind wie die Läuferpole (4) in der Teilung k angebracht. Bei drehender Welle (20) schaltet die Steuerscheibe (21) die Versorgungsspannung (16) über die Lichtschranken (19) an die Erregerwicklungen (5), so daß k Ständerpole (3) in der Symmetrie der Läuferpole (4), d.h. in derselben Teilung k, stromdurchflosen sind.

Bei einer besonderem Ausführungsform der dynamoelektrischen Maschine wird die Spannung, die von den Permanentmagneten (14) nach dem Abschalten der Versorgungsspannung (16) in den Erregerwicklungen (5) induziert wird, ausgenutzt. Um diese Spannung zu nutzen, kann parallel zu jeder Erregerwicklung (5) ein Verbraucher (24) geschaltet werden. Da es sich bei den induzierten Strömen um Ströme im der Versorgungsspannung (16) entgegengesetzten Vorzeichens handelt, ist es ausreichend, den Verbraucher (24) statt mit einem Schalter, mit einer in Sperrichtung zur Versorgungsspannung (16) geschalteten Diode (23) mit der Erregerwicklung (5) zu verbinden.

Der Wirkungsgrad der dynamoelektrischen Maschine läßt sich insbesondere dadurch steigern, daß die von den Permanentmagneten (14) induzierte Spannung als Versorgungsspannung für die Ständerpole einer weiteren dynamoelektrischen Maschine genutzt wird. In einer vorteilhaften Ausführung ist daher auf derselben Welle (20) ein zweiter, insbesondere zu dem Läufer (2) baugleicher Läufer mit einem ihn umgebenden zweiten, insbesondere zu dem Ständer (1) baugleichen Ständer angebracht. Die durch die Permanentmagneten des ersten Ständer-Läufer-Paares induzierte Spannung wird als Versorgungsspannung des zweiten Ständer-Läufer-Paares benutzt und vice versa.

## Patentansprüche

1. Dynamoelektrische Maschine, mit mindestens einem Ständer (1), der eine Anzahl von n Ständerpolen (3) mit ferromagnetischen von Erregerwicklungen (5) umgebenen Kernen (6) aufweist, und mit mindestens einem Läufer (2), der eine Anzahl von k permanentmagnetischen Läuferpolen (4) aufweist
**dadurch gekennzeichnet**, daß die Kerne (6) der Ständerpole (3) permanent magnetisiert sind und daß an die Erregerwicklungen (5) zeitweilig eine gleichgerichtete Spannung (16) anlegbar ist, die in den Ständerpolen eine Magnetisierung induziert, die der permanenten Magnetisierung entgegengerichtet ist.

2. Dynamoelektrische Maschine nach Anspruch 1
**dadurch gekennzeichnet**, daß die Kerne (6) der Ständerpole (3) von Permanentmagneten (14) magnetisiert werden.

3. Dynamoelektrische Maschine nach den Ansprüchen 1 und 2
**dadurch gekennzeichnet**, daß die Kerne (6) der Ständerpole die Form von Mantelkernen haben, die ein Oberjoch (10), ein Unterjoch (11), einen Mittelsteg (13) und zwei Seitenstege (12) aufweisen.

4. Dynamoelektrische Maschine nach einem der vorherigen Ansprüche
**dadurch gekennzeichnet**, daß die Mittelstege (13) der Mantelkerne von den Erregerwicklungen (5) umgeben sind.

5. Dynamoelektrische Maschine nach einem der vorherigen Ansprüche
**dadurch gekennzeichnet**, daß die Permanentmagneten (14) im Unterjoch eines jeden Mantelkernes beidseitig des Mittelsteges (13) angeordnet sind.

6. Dynamoelektrische Maschine nach einem der vorherigen Ansprüche
**dadurch gekennzeichnet**, daß die Ständerpole auf einer Halterung (17) möglichst kleiner magnetischer Suszeptibilität angeordnet sind.

7. Dynamoelektrische Maschine nach einem der vorherigen Ansprüche
**dadurch gekennzeichnet**, daß die Anzahl k der Läuferpole (4) kleiner ist, als die Anzahl n der Ständerpole (2).

8. Dynamoelektrische Maschine nach einem der vorherigen Ansprüche
**dadurch gekennzeichnet**, daß die Kerne der Läuferpole (4) von Permanentmagneten (15) magnetisiert werden.

9. Dynamoelektrische Maschine nach einem der vorherigen Ansprüche
**dadurch gekennzeichnet**, daß die Permanentmagneten (15) im Kern eines Läuferpols (4) gleichpolig zu den Permanentmagneten (14) im Ständerpol (6) angeordnet sind.

10. Dynamoelektrische Maschine nach einem der vorherigen Ansprüche
**dadurch gekennzeichnet**, daß die Permanentmagneten (14) in den Kernen der Läuferpole (4) mit ihrer Polachse nahezu senkrecht zur Polachse der Permanentmagneten (15) in den Kernen der Ständerpolen (6) angeordnet sind.

11. Dynamoelektrische Maschine nach einem der vorherigen Ansprüche
**dadurch gekennzeichnet**, daß jede Erregerwicklung (5) über einen Schalter mit der gleichgerichteten Spannung (16) verbunden ist.

12. Dynamoelektrische Maschine nach einem der vorherigen Ansprüche
**dadurch gekennzeichnet**, daß ein Schalter jeweils k Erregerwicklungen (5) symmetrisch zu den Läuferpolen (4) mit der gleichgerichteten Spannung (16) verbindet.

13. Dynamoelektrische Maschine nach einem der vorherigen Ansprüche
**dadurch gekennzeichnet**, daß eine Steuerscheibe (21) auf der Welle (20) der dynamoelektrischen Maschine justierbar befestigt ist, die die Schalter betätigt.

14. Dynamoelektrische Maschine nach einem der vorherigen Ansprüche
**dadurch gekennzeichnet**, daß die Schalter Transistoren (18) sind, deren Basen mit Lichtschranken (19), insbesondere mit Gabellichtschranken, verbunden sind.

15. Dynamoelektrische Maschine nach einem der vorherigen Ansprüche
**dadurch gekennzeichnet**, daß die Steuerscheibe (21) Aussparungen (22) in der Teilung k aufweist, die jeweils eine Lichtschranke (19) schalten.

16. Dynamoelektrische Maschine nach einem der vorherigen Ansprüche
**dadurch gekennzeichnet**, daß die Erregerwicklungen (5) parallel zu einem Verbraucher (24) schaltbar sind.

17. Dynamoelektrische Maschine nach einem der vorherigen Ansprüche
**dadurch gekennzeichnet**, daß das in einem Kern (6) eines Ständerpols (3)von der Erregerwicklung (5) induzierte, dem permanenten Magnetfeld entgegengesetzte Magnetfeld von etwa gleicher Größe wie das permanente Magnetfeld im Kern (6) ist.

18. Dynamoelektrische Maschine nach einem der vorherigen Ansprüche
**dadurch gekennzeichnet**, daß sich im Verbraucherstromkreis eine Diode (23) in Sperrichtung zur gleichgerichteten Spannung (16) befindet.

19. Dynamoelektrische Maschine nach einem der vorherigen Ansprüche
**dadurch gekennzeichnet**, daß der Verbraucher (24) eine zweite dynamoelektrische Maschine ist, die dieselbe Welle (20) wie die erste dynamoelektrische Maschine antreibt.
